(19) Europäisches Patentamt
European Patent Office
Office européen des brevets

(11) EP 0 471 481 B1

(12) # EUROPEAN PATENT SPECIFICATION

(45) Date of publication and mention
of the grant of the patent:
**22.01.1997 Bulletin 1997/04**

(21) Application number: **91307093.4**

(22) Date of filing: **01.08.1991**

(51) Int. Cl.⁶: **A01N 57/34**, C02F 1/50
// (A01N57/34, 59:00, 55:04,
47:44, 43:88, 43:80, 41:08,
35:08)

(54) **BACTERIAL INHIBITING COMPOSITIONS AND THEIR USE**

Bakterienhemmende Zusammensetzungen und deren Verwendung

Compositions inhibitrices des bactéries et leur utilisation

(84) Designated Contracting States:
**AT BE DE ES FR GB IT NL SE**

(30) Priority: **13.08.1990 US 566957**
**13.08.1990 US 566958**
**13.08.1990 US 566956**
**13.08.1990 US 566955**
**13.08.1990 US 566953**
**13.08.1990 US 566952**
**13.08.1990 US 566954**
**13.08.1990 US 566951**
**13.08.1990 US 566950**

(43) Date of publication of application:
**19.02.1992 Bulletin 1992/08**

(60) Divisional application: **96201621.8**

(73) Proprietor: **BETZ EUROPE, INC.**
**Trevose Pennsylvania 19047 (US)**

(72) Inventors:
• **Whitekettle, Wilson Kurt**
**Conroe,TX 77302 (US)**
• **Donofrio, Deborah Kalman**
**The Woodlands, TX 77380 (US)**

(74) Representative: **W.P. Thompson & Co.**
**Coopers Building,**
**Church Street**
**Liverpool L1 3AB (GB)**

(56) References cited:
**US-A- 5 010 066**

• **RESEARCH DISCLOSURE, no. 225, January**
**1983, Havant, Hampshire (GB); CIBA-GEIGY**
**PLC, p. 4, no. 22520**

## Description

The present invention relates to bacterial inhibiting or biocidal compositions. More particularly it relates to bacterial inhibiting compositions comprising n-tributyl tetradecylphosphonium chloride and at least one other component, the composition exhibiting synergy.

The formation of slimes by microorganisms is a problem that is encountered in many aqueous systems. For example, the problem is not only found in natural waters such as, for example, lagoons, lakes or ponds, and confined waters as in pools, but also in such industrial systems as cooling water systems, air washer systems and pulp and paper mill systems. All possess conditions which are conducive to the growth and reproduction of slime-forming microorganisms. In both once-through and recirculating cooling systems, for example, which employ large quantities of water as a cooling medium, the formation of slime by microorganisms is an extensive and constant problem.

Airborne organisms are readily entrained in the water from cooling towers and find this warm medium an ideal environment for growth and multiplication. Aerobic and heliotropic organisms flourish on the tower proper while other organisms colonize and grow in such areas as the tower sump and the piping and passages of the cooling system. The slime formation not only aids in the deterioration of the tower structure in the case of wooden towers, but also promotes corrosion when it deposits on metal surfaces. Slime carried through the cooling system plugs and fouls lines, valves, strainers, and the like and deposits on heat exchange surfaces. In the latter case, the impedance of heat transfer can greatly reduce the efficiency of the cooling system.

In pulp and paper mill systems, slime formed by microorganisms is commonly encountered and causes fouling, plugging, or corrosion of the system. The slime also becomes entrained in the paper produced to cause breakouts on the paper machines, which results in work stoppages and the loss of production time. The slime is also responsible for unsightly blemishes in the final product, which result in rejects and wasted output.

The previously discussed problems have resulted in the extensive utilization of biocides in cooling water and pulp and paper mill systems. Materials which have enjoyed widespread use in such applications include chlorine, chlorinated phenols, organo-bromines, and various organo- sulphur compounds. All of these compounds are generally useful for this purpose but each is attended by a variety of impediments. For example, chlorination is limited both by its specific toxicity for slime-forming organisms at economic levels and by the tendency of chlorine to react, which results in the expenditure of the chlorine before its full biocidal function is achieved. Other biocides are attended by odour problems and hazards with respect to storage, use or handling which limit their utility. To date, no one compound or type of compound has achieved a clearly established predominance with respect to the applications discussed. Likewise, lagoons, ponds, lakes, and even pools, either used for pleasure purposes or used for industrial purposes for the disposal and storage of industrial wastes, become, during the warm weather, besieged by slime due to microorganism growth and reproduction. In the case of industrial storage or disposal of industrial materials, the microorganisms cause additional problems which must be eliminated prior to the use of the materials or disposal of the waste.

Naturally, economy is a major consideration with respect to all of these biocides. Such economic considerations attach to both the cost of the biocide and the expense of its application. The cost performance index of any biocide is derived from the basic cost of the material, its effectiveness per unit of weight, the duration of its biocidal or biostatic effect in the system treated, and the ease and frequency of its addition to the system treated. To date, none of the commercially available biocides has exhibited a prolonged biocidal effect. Instead, their effectiveness is rapidly reduced as a result of exposure to physical conditions such as, for example, temperature, association with ingredients contained by the system toward which they exhibit an affinity or substantivity, or the like with a resultant restriction or elimination of their biocidal effectiveness, or by dilution.

As a consequence, the use of such biocides involves their continuous or frequent addition to systems to be treated and their addition to multiple points or zones in the systems to be treated. Accordingly, the cost of the biocide and the labour cost of applying it are considerable. In other instances, the difficulty of access to the zone in which slime formation is experienced precludes the effective use of a biocide. For example, if in a particular system there is no access to an area at which slime formation occurs the biocide can only be applied at a point which is upstream in the flow system. However, the physical or chemical conditions, e.g., chemical reactivity or thermal degradation, which exist between the point at which the biocide may be added to the system and the point at which its biocidal effect is desired render the effective use of a biocide impossible.

Similarly, in a system experiencing relatively slow flow, such as, for example, a paper mill, if a biocide is added at the beginning of the system, its biocidal effect may be completely dissipated before it has reached all of the points at which this effect is desired or required. As a consequence, the biocide must be added at multiple points, and even then a diminishing biocidal effect will be experienced between one point of addition to the system and the next point downstream at which the biocides may be added. In addition to the increased cost of utilizing and maintaining multiple feed points, gross ineconomies with respect to the cost of the biocide are experienced. Specifically, at each point of addition, an excess of the biocide is added to the system in order to compensate for that portion of the biocide which will be expended in reacting with other constituents present in the system or experience physical changes which impair its biocidal activity.

It has now been found possible to provide a bacterial or biocidal composition which comprises, as active ingredients, (a) n-tributyl tetradecyl phosphonium chloride (TPC) and (b) an additional chemical component, said additional component being n-dodecylguanidine or a water soluble salt thereof, such as, for example, the hydrochloride, acetate, carbonate, or nitrate salt (DGH).

The weight ratio of (a) to (b) is from 28.5:1 to 2.85:1.

TPC is commercially available from Ciba-Geigy under the Trade Mark "Belclene 350" and is marketed as a "broad spectrum biocide specifically developed for the control of microbiological fouling in cooling water systems". Use of the TPC compound in a biological composition is disclosed in US-A- 4 725 587 and US-A- 4 835 144 (Whitekettle et al), and US-A-4 835 143 (Donofrio et al) both of which have been assigned to the present Applicant.

The physical properties of "Belclene 350" are reported as being:

| Appearance | Clear, colourless liquid |
|---|---|
| Specific Gravity at 20°C | 0.96 |
| pH | 7.0 - 8.0 |
| Boiling Point | 100°C |
| Freezing Point | -8 to -10°C |
| Viscosity | 50 - 80 cP |
| Odour | Slight |
| Solubility Water | Completely miscible in all proportions |
| Methanol | Greater than 50% |
| Isopropanol | Greater than 50% |
| Ethylene Glycol | Greater than 50% |

As to the water soluble n-dodecylguanidine salt that may be used, the hydrochloride, acetate, carbonate and nitrate salts may be mentioned as being exemplary. The preferred hydrochloride salt is commercially available under the Trade Marks "Cytox 2013" or "Cytox 2014" from American Cyanamid.

Use of n-dodecylguanidine hydrochloride and n-dodecyl-guanidine acetate are both listed at 21 CFR 176.170 as being F.D.A. acceptable antimicrobial agents for paper and paperboard use under certain conditions.

The following Patent Specifications disclosing the use of DGH in various biocidal compositions may be of interest: US-A- Nos. 4 745 132 (Swered et al); US-A- 4 725 623 (Whitekettle et al); US-A- 3 264 172 (Regutti); US-A- 3 142 615 (Wehner); and US-A-2 906 595 (Pelcak et al).

Surprisingly, it has now been found that the compositions of the invention are especially efficacious in controlling the growth of listed are especially efficacious in controlling the growth of bacterial microbes, specifically the <u>Klebsiella pneumoniae</u> species. This particular species is a member of the capsulated, facultative class of bacteria and is generally present in air, water and soil.

These bacteria continually contaminate open cooling systems and pulping and papermaking systems and are among the most common slime formers. The slime may be viewed as being a mass of agglomerated cells stuck together by the cementing action of the gelatinous polysaccharide or proteinaceous secretions around each cell. The slimy mass entraps other debris, restricts water flow and heat transfer, and may serve as a site for corrosion.

The fact that the <u>Klebsiella</u> species used in the tests is a facultative species is important as, by definition, such bacteria may thrive under either aerobic or anaerobic conditions. Accordingly, by reason of demonstrated efficacy in the growth inhibition of this particular species, one can expect similar growth inhibition attributes when other aerobic or anaerobic bacterial species are encountered. It is also expected that these compositions will exhibit similar growth inhibition attributes when fungi and algae species are encountered.

According to the present invention there is therefore provided a method for controlling the growth of bacteria, particularly <u>Klebsiella</u> <u>pneumoniae</u> bacteria, in an aqueous system which comprises adding to the system from about 0.1 to 200 parts by weight of a composition of the invention per one million parts by weight of the aqueous system. The aqueous system may comprise, for example, a cooling water system or a pulping and papermaking system.

In accordance with the present invention, the composition of the invention may be added to the desired aqueous system in need of biocidal treatment, in an amount of from 0.1 to 200 parts of the combined treatment to one million parts (by weight) of the aqueous medium. Preferably, 5 to 50 parts of the combined treatment per one million parts (by weight) of the aqueous medium is added.

The combined treatments are added, for example, to cooling water systems, paper and pulp mill systems, pools, ponds, lagoons, or lakes, to control the formation of bacterial microorganisms, which may be contained by, or which may become entrained in, the system to be treated. It has been found that the compositions and methods of utilization of the treatments are efficacious in controlling the facultative bacterium, Klebsiella pneumoniae, which may populate these systems. It is thought that the combined treatment compositions and methods of the present invention will also be efficacious in inhibiting and controlling all types of aerobic and anaerobic bacteria.

Surprisingly, it has been found that when the ingredients are mixed, in certain instances, the resulting mixtures possess a higher degree of bactericidal activity than that of the individual ingredients comprising the mixtures. Accordingly, it is possible to produce highly efficacious bactericides. Because of the enhanced activity of the mixtures, the total quantity of each of the bacterial treatments may be reduced. In addition, the high degree of bactericidal effectiveness which is provided by each of the ingredients may be exploited without use of higher concentrations of each.

The following experimental data were developed. It is to be remembered that the following examples are to be regarded solely as being illustrative, and not as restricting the scope of the invention.

TPC and n-dodecylguanidine or a water soluble salt thereof were added in varying ratios and over a wide range of concentrations to a liquid nutrient medium which was subsequently inoculated with a standard volume of a suspension of the facultative bacterium Klebsiella pneumoniae. Growth was measured by determining the amount of radioactivity accumulated by the cells when 14C-glucose was added as the sole source of carbon in the nutrient medium. The effect of the biocide chemicals, alone and in combination, is to reduce the rate and amount of 14C incorporation into the cells during incubation, as compared to controls not treated with the chemicals. Additions of the biocides, alone and in varying combinations and concentrations, were made according to the accepted "checkerboard" technique described by M. T. Kelley and J. M. Matsen, Antimicrobial Agents and Chemotherapy. 9: 440 (1976). Following a two hour incubation, the amount of radioactivity incorporated in the cells was determined by counting (14C liquid scintillation procedures) for all treated and untreated samples. The percent reduction of each treated sample was calculated from the relationship:

$$\frac{\text{Control 14C(cpm) - Treated 14C(cpm)}}{\text{Control 14C(cpm)}} \times 100 = \%\ \text{reduction}$$

Plotting the % reduction of 14C level against the concentration of each biocide acting alone results in a dose-response curve, from which the biocide dose necessary to achieve any given % reduction can be interpolated.

Synergism was determined by the method of calculation described by F. C. Kull, P. C. Eisman, H. D. Sylwestrowicz and R. L. Mayer, Applied Microbiology 9,538 (1961) using the relationship:

$$\frac{Q_A}{Q_a} + \frac{Q_B}{Q_b} = \text{synergism index (SI)}$$

where:

$Q_a$ = quantity of compound A, acting alone, producing an end point
$Q_b$ = quantity of compound B, acting alone, producing an end point
$Q_A$ = quantity of compound A in mixture, producing an end point
$Q_B$ = quantity of compound B in mixture, producing an end point

The end point used in the calculations is the % reduction caused by each mixture of A and B. $Q_A$ and $Q_B$ are the individual concentrations in the A/B mixture causing a given % reduction. $Q_a$ and $Q_b$ are determined by interpolation from the respective dose-response curves of A and B as those concentrations of A and B acting alone which produce the same % reduction as each specific mixture produced.

Dose-response curves for each active acting alone were determined by linear regression analysis of the dose-response data. Data were fitted to a curve represented by the equation shown with each data set. After linearizing the data, the contributions of each biocide component in the biocide mixtures to the inhibition of radioisotope uptake were determined by interpolation with the dose-response curve of the respective biocide. If, for example, quantities of $Q_A$ plus $Q_B$ are sufficient to give a 50% reduction in 146 content, $Q_a$ and $Q_b$ are those quantities of A or B acting alone, respectively, found to give 50% reduction in 14C content. A synergism index (SI) is calculated for each combination of A and B.

Where the SI is less than 1, synergism exists. Where the SI = 1, additivity exists. Where SI is greater than 1, antagonism exists.

The data in the following tables come from treating Klebsiella pneumoniae, a common nuisance bacterial type found in industrial cooling waters and in pulping and paper making systems, with varying ratios and concentrations of TPC and each additional biocidal component. Shown for each combination is the % reduction of 14C content (% I), the

4

calculated SI, and the weight ratio of TPC and each additional biocidal component.

TABLE I

TPC and DGH

| ppm TPC[1] | ppm DGH[2] | Ratio TPC:DGH | % I | SI |
|---|---|---|---|---|
| 0 | 20 | 0:100 | 96 | |
| 0 | 10 | 0:100 | 83 | |
| 0 | 7.5 | 0:100 | 56 | |
| 0 | 5 | 0:100 | 0 | |
| 0 | 3.75 | 0:100 | 0 | |
| 0 | 2.5 | 0:100 | 0 | |
| 100 | 0 | 100:0 | 94 | |
| 80 | 0 | 100:0 | 84 | |
| 50 | 0 | 100:0 | 69 | |
| 40 | 0 | 100:0 | 54 | |
| 25 | 0 | 100:0 | 40 | |
| 20 | 0 | 100:0 | 12 | |
| 100 | 20 | 5:1 | 99 | 2.29 |
| 100 | 10 | 10:1 | 99 | 1.63 |
| 100 | 7.5 | 13.3:1 | 99 | 1.47 |
| 100 | 5 | 20:1 | 98 | 1.33 |
| 100 | 3.75 | 26.6:1 | 98 | 1.25 |
| 100 | 2.5 | 40:1 | 97 | 1.19 |
| 80 | 20 | 4:1 | 99 | 2.09 |
| 80 | 10 | 8:1 | 99 | 1.44 |
| 80 | 7.5 | 10.6:1 | 98 | 1.30 |
| 80 | 5 | 16:1 | 98 | 1.13 |
| 80 | 3.75 | 21.3:1 | 98 | 1.05 |
| 80 | 2.5 | 32:1 | 97 | 0.98 |
| 50 | 20 | 2.5:1 | 99 | 1.80 |
| 50 | 10 | 5:1 | 98 | 1.16 |
| 50 | 7.5 | 6.67:1 | 97 | 1.01 |
| 50 | 5 | 10:1 | 98 | 0.83* |
| 50 | 3.75 | 13.3:1 | 97 | 0.76* |
| 50 | 2.5 | 20:1 | 96 | 0.69* |
| 40 | 20 | 2:1 | 99 | 1.70 |
| 40 | 10 | 4:1 | 98 | 1.06 |
| 40 | 7.5 | 5.3:1 | 97 | 0.91* |
| 40 | 5 | 8:1 | 97 | 0.74* |
| 40 | 3.75 | 10.6:1 | 95 | 0.68* |

TABLE I   Cont'd

TPC AND DGH

| ppm TPC[1] | ppm DGH[2] | Ratio TPC:DGH | % I | SI |
|---|---|---|---|---|
| 40 | 2.5 | 16:1 | 90 | 0.65* |
| 25 | 20 | 1.25:1 | 99 | 1.55 |
| 25 | 10 | 2.5:1 | 98 | 0.91* |
| 25 | 7.5 | 3.3:1 | 97 | 0.76* |
| 25 | 5 | 5:1 | 95 | 0.61* |
| 25 | 3.75 | 6.67:1 | 92 | 0.55* |
| 25 | 2.5 | 10:1 | 89 | 0.49* |
| 20 | 20 | 1:1 | 98 | 1.52 |
| 20 | 10 | 2:1 | 97 | 0.87* |
| 20 | 7.5 | 2.67:1 | 96 | 0.72* |
| 20 | 5 | 4:1 | 93 | 0.57* |
| 20 | 3.75 | 5.3:1 | 90 | 0.51* |
| 20 | 2.5 | 8:1 | 84 | 0.46* |

[1] product containing 50% actives TPC
[2] product containing 35% actives DGH

## TABLE II

### TPC and DGH

| ppm TPC[1] | ppm DGH[2] | Ratio TPC:DGH | % I | SI |
|---|---|---|---|---|
| 0 | 20 | 0:100 | 96 | |
| 0 | 10 | 0:100 | 88 | |
| 0 | 7.5 | 0:100 | 54 | |
| 0 | 5 | 0:100 | 0 | |
| 0 | 3.75 | 0:100 | 0 | |
| 0 | 2.5 | 0:100 | 0 | |
| 100 | 0 | 100:0 | 94 | |
| 80 | 0 | 100:0 | 91 | |
| 50 | 0 | 100:0 | 81 | |
| 40 | 0 | 100:0 | 60 | |
| 25 | 0 | 100:0 | 31 | |
| 20 | 0 | 100:0 | 21 | |
| 100 | 20 | 5:1 | 99 | 2.44 |
| 100 | 10 | 10:1 | 99 | 1.77 |
| 100 | 7.5 | 13.3:1 | 99 | 1.43 |
| 100 | 5 | 20:1 | 99 | 1.43 |
| 100 | 3.75 | 26.6:1 | 99 | 1.35 |
| 100 | 2.5 | 40:1 | 98 | 1.28 |
| 80 | 20 | 4:1 | 99 | 2.22 |
| 80 | 10 | 8:1 | 99 | 1.55 |
| 80 | 7.5 | 10.6:1 | 99 | 1.38 |
| 80 | 5 | 16:1 | 98 | 1.23 |
| 80 | 3.75 | 21.3:1 | 99 | 1.13 |
| 80 | 2.5 | 32:1 | 99 | 1.05 |
| 50 | 20 | 2.5:1 | 99 | 1.89 |
| 50 | 10 | 5:1 | 98 | 1.24 |
| 50 | 7.5 | 6.67:1 | 97 | 1.09 |
| 50 | 5 | 10:1 | 96 | 0.93* |
| 50 | 3.75 | 13.3:1 | 95 | 0.86* |
| 50 | 2.5 | 20:1 | 96 | 0.80* |
| 40 | 20 | 2:1 | 99 | 1.78 |
| 40 | 10 | 4:1 | 97 | 1.14 |
| 40 | 7.5 | 5.3:1 | 97 | 0.97 |
| 40 | 5 | 8:1 | 96 | 0.81* |
| 40 | 3.75 | 10.6:1 | 95 | 0.74* |
| 40 | 2.5 | 16:1 | 93 | 0.67* |

EP 0 471 481 B1

<u>TABLE II Cont'd</u>

<u>TPC and DGH</u>

| ppm TPC[1] | ppm DGH[2] | Ratio TPC:DGH | % I | SI |
|---|---|---|---|---|
| 25 | 20 | 1.25:1 | 99 | 1.62 |
| 25 | 10 | 2.5:1 | 98 | 0.96 |
| 25 | 7.5 | 3.3:1 | 97 | 0.80* |
| 25 | 5 | 5:1 | 99 | 0.66* |
| 25 | 3.75 | 6.67:1 | 92 | 0.59* |
| 25 | 2.5 | 10:1 | 88 | 0.53* |
| 20 | 20 | 1:1 | 97 | 1.60 |
| 20 | 10 | 2:1 | 95 | 0.94* |
| 20 | 7.5 | 2.67:1 | 95 | 0.77* |
| 20 | 5 | 4:1 | 94 | 0.60* |
| 20 | 3.75 | 5.3:1 | 91 | 0.53* |
| 20 | 2.5 | 8:1 | 81 | 0.52* |

[1] product containing 50% actives TPC
[2] product containing 35% actives DGH

Asterisks in the SI column indicate synergistic combinations in accordance with the Kull method supra.

In the preceding tables, for all combinations tested, differences seen between the replicates are due to normal experimental variance.

In accordance with the preceding tables, unexpected results occurred more frequently within the following product ratios:

The individual products contained the following amounts of active biocidal components:

| TPC: | about 50% |
|---|---|
| DGH: | about 35% |

Therefore, when based on the active biocidal component, unexpected results appear more frequently within the following ranges of active components:

| | From about |
|---|---|
| TPC to DGH | 28.5:1 to 2.85:1 |

At present, it is most preferred that commercial products embodying the invention comprise weight ratios of active components of about:

4:1 TPC : DGH

## Claims

1. A bacterial inhibiting composition which comprises a synergistic mixture of (a) n-tributyl tetradecyl phosphonium chloride (TPC) and (b) an additional biocidal component, said additional biocidal component being n-dodecylguanidine or a water soluble salt thereof, the weight ratio of (a) to (b) being from 28.5:1 to 2.85:1.

8

2. A method for controlling the growth of bacteria in an aqueous system which comprises adding to the system from 0.1 to 200 parts by weight of a composition per one million parts by weight of said aqueous system, the composition being as defined in claim 1.

3. A method according to claim 2, wherein the bacteria are Klebsiella pneumoniae bacteria.

4. A method according to claim 2 or 3, wherein the composition is added to the system in an amount, by weight, of from 5 to 50 parts per million of the aqueous system.

5. A method according to any of claims 2 to 4, wherein the aqueous system comprises a cooling water system.

6. A method according to any of claims 2 to 4, wherein the aqueous system comprises a pulping and papermaking system.

**Patentansprüche**

1. Bakterienhemmende Zusammensetzung, die eine synergistische Mischung aus folgendem umfaßt: (a) n-Tributyltetradecylphosphoniumchlorid (TPC) und (b) eine zusätzliche biozide Komponente, wobei genannte zusätzliche biozide Komponente n-Dodecylguanidin oder ein wasserlösliches Salz davon ist, wobei das Gewichtsverhältnis von (a) zu (b) zwischen 28,5:1 und 2,85:1 liegt.

2. Verfahren zur Kontrolle des Wachstums von Bakterien in einem wäßrigen System, welches das Zufügen zu dem System von 0,1 bis 200 Gewichtsteilen einer Zusammensetzung pro eine Million Gewichtsteile von genanntem wäßrigem System umfaßt, wobei die Zusammensetzung nach Anspruch 1 definiert ist.

3. Verfahren nach Anspruch 2, worin die Bakterien Klebsiella pneumoniae-Bakterien sind.

4. Verfahren nach Anspruch 2 oder 3, worin die Zusammensetzung dem System in einer Menge von 5 bis 50 Gewichtsteilen pro Million des wäßrigen Systems zugefügt wird.

5. Verfahren nach einem der Ansprüche 2 bis 4, worin das wäßrige System ein Kühlwassersystem umfaßt.

6. Verfahren nach einem der Ansprüche 2 bis 4, worin das wäßrige System ein Aufschluß- und Papierherstellungssystem umfaßt.

**Revendications**

1. Une composition inhibitrice de bactéries qui comprend un mélange synergique de (a) chlorure de n-tributyl-tétradécyl-phosphonium (TPC) et (b) un composant biocide supplémentaire, ledit composant biocide supplémentaire étant de la n-dodécylguanidine ou un sel soluble dans l'eau de cedit composant, le rapport de poids de (a) à (b) étant de 28,5:1 à 2,85:1.

2. Une méthode pour contrôler la croissance des bactéries dans un système aqueux qui comprend ajouter au système d'entre 0,1 à 200 parties par poids d'une composition pour un million de parties par poids dudit système aqueux, ladite composition étant telle que définie dans la revendication 1.

3. Une méthode selon la revendication 2, dans laquelle les bactéries sont des bactéries Klebsiella pneumoniae.

4. Une méthode selon la revendication 2 ou 3, dans laquelle la composition est ajoutée au système selon une quantité, par poids, de 5 à 50 parties par million du système aqueux.

5. Une méthode selon l'une quelconque des revendications 2 à 4, dans laquelle le système aqueux comprend un système d'eau de refroidissement.

6. Une méthode conformément à l'une quelconque des revendications 2 à 4, dans laquelle le système aqueux comprend un système de réduction en pâte et de fabrication de papier.